# EUROPÄISCHE PATENTSCHRIFT

(11) **EP 0 321 874 B1**
(45) Veröffentlichungstag und Bekanntmachung des Hinweises auf die Patenterteilung: **08.09.1993**
(21) Anmeldenummer: 88121079.3
(22) Anmeldetag: 16.12.1988
(51) Int. Cl.: H02B 1/04

(54) **Vorrichtung zur Befestigung von Gehäusen in Öffnungen einer Schalttafel oder einer Rastersystemwand**
Device for mounting housings in switchboard or mosaic-screen openings
Dispositif pour le montage d'un boîtier dans une ouverture d'un tableau ou d'un panneau mosaique

(30) Priorität: 21.12.1987 DE 8716784 U
(43) Veröffentlichungstag der Anmeldung: 28.06.1989
(73) Patentinhaber: Apra-Gerätebau Ing. (grad.) Wolfgang Appenzeller und Wilfried Rademacher oHG, 54550 Daun (DE)
(72) Erfinder: Drobneski, Harwig, D-5533 Hillesheim (DE)
(74) Vertreter: Boecker, Joachim, Dr.-Ing.

(56) Entgegenhaltungen:
- DE-A- 2 120 556
- DE-A- 2 628 750
- FR-A- 1 366 038

## Beschreibung

Die Erfindung betrifft eine Vorrichtung zur Befestigung von Gehäusen in Öffnungen einer Aufnahmewand, beispielsweise einer Schalttafelwand oder einer Rastersystemwand, gemäß dem Oberbegriff des Anspruches 1. Bei den Gehäusen handelt es sich vorzugsweise um sogenannte MSR-Geräte, also Geräte für Messen, Steuern und Regeln. Eine solches Gehäuse ist bekannt aus der DE-A-2 628 750.

Bei der aus der DE-A-2 628 750 bekannten Befestigungsvorrichtung ist das Federelement, abgesehen von einem schräg verlaufenden Anfangsabschnitt, mit konstanter Höhe ausgebildet. Dies hat zur Folge, daß beim Einschieben des Gehäuses in die Aufnahmewand das verformte Federelement keine in Einschubrichtung wirkende Kraftkomponente entwickelt. Um eine arrettierende Wirkung des Gehäuses in der eingeschobenen Endlage zu erreichen, sind die äußeren Ränder des Federelementes gezahnt ausgebildet. Diese Verzahnung unterliegt dem Verschleiß und beschädigt den Rand der Einschuböffnung in der Aufnahmewand.

Aus der DE-GM 87 04 506 ist ein Gehäuse mit einer Befestigungsvorrichtung bekannt, die ebenfalls ein Federelement verwendet. Dieses besteht aus einem länglichen ebenen Federblech, aus dem federnde Stege herausgebogen sind. Zur Befestigung des Federlementes sind in der Gehäusewand zwei Messingkegel eingelassen, die mit ihrer Grundfläche nach oben aus der Gehäuseseitenwand herausragen. In dem Federblech sind entsprechend bemessene Langlöcher vorhanden, mit denen das Federblech unter die hervorstehenden Teile der Kegel geschoben werden können. Mit diesen Federlementen ist eine gute Befestigung des Gehäuses in einer Schalttafelöffnung erreichbar. Nachteilig ist jedoch der relativ große Aufwand für die Befestigungsvorrichtung, da zu ihr zwei getrennte Messingkegel und ein relativ aufwendiges Federblechelement gehören.

Der Erfindung liegt die Aufgabe zugrunde, eine Befestigungsvorrichtung für ein Gehäuse der eingangs genannten Art zu schaffen, bei der die Befestigungsvorrichtung selbst ohne zusätzliche Mittel eine das Gehäuse in seiner eingeschobenen Lage haltende Kraft entwickelt.

Zur Lösung dieser Aufgabe wird eine Befestigungsvorrichtung gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Das Gehäuse mit der Befestigungsvorrichtung gemäß der Erfindung wird von der Frontseite in die Aufnahmewand eingeschoben und wird in der eingeschobenen Lage durch eine von dem Federelement entwickelte, das Gehäuse in die Aufnahmewand hineinziehende Kraftkomponente zusätzlich gehalten. Beim Einschieben des Gerätes entwickelt diese Kraftkomponente eine fühlbare Einrastwirkung beim Erreichen der Endlage.

Das Federlement bei der Befestigungsvorrichtung nach der Erfindung kann aus einem Teil, und zwar vorzugsweise aus Kunststoff, hergestellt werden, welches mit seinen Stiften einfach in entsprechende Löcher in der Gehäusewand eingedrückt wird.

Anhand des in den Figuren gezeigten Ausführungsbeispiels soll die Erfindung näher erläutert werden. Es zeigen
- Figur 1: ein leeres Gehäuse in Seitenansicht mit einer Befestigungsvorrichtung gemäß der Erfindung,
- Figur 2: das Gehäuse in Figur 1 von oben gesehen,
- Figur 3: das Gehäuse in Figur 1 von hinten gesehen mit abgenommener Rückwand.
- Figur 4 bis 6: ein Ausführungsbeispiel eines Federlementes der Befestigungsvorrichtung gemäß der Erfindung in drei Ansichten.

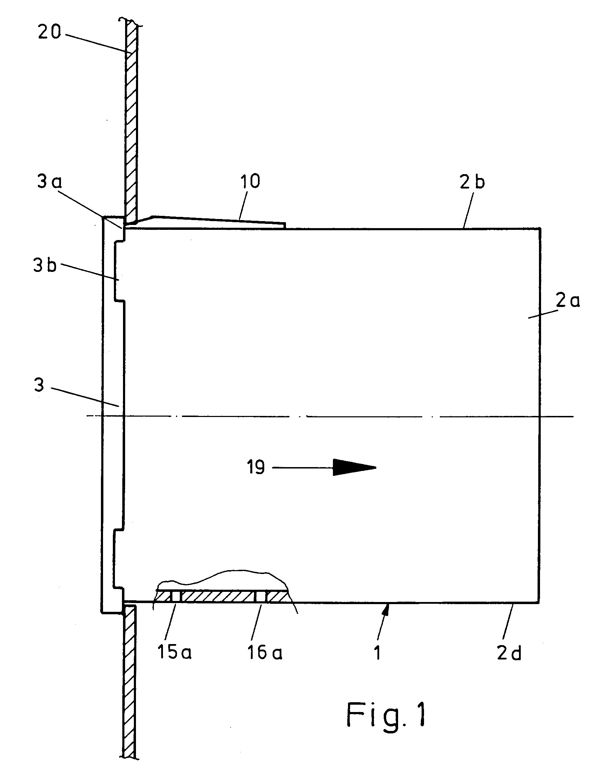

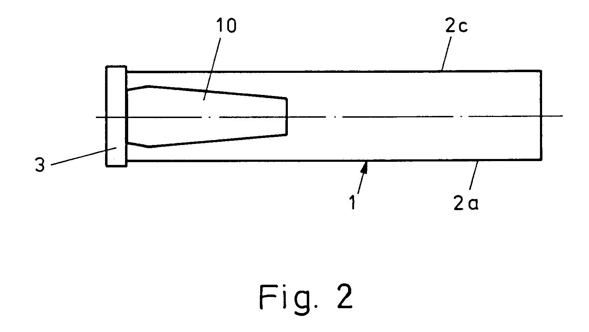

Die Figuren 1 bis 3 zeigen ein aus Kunststoff bestehendes an sich bekanntes schmales MSR-Gehäuse, das aus vier Seitenwänden 2a bis 2d besteht, einer nicht dargestellten Rückwand, einer nicht dargestellten Frontseite und einem nicht dargestellten auf die Frontseite aufsetzbaren Frontrahmen. Die beiden schmalen gegenüberliegenden Seitenwände sind an ihrer Innenseite mit in Richtung von der Frontseite zur Rückseite verlaufenden Stegen 4 versehen, zwischen denen Nuten zur Aufnahme von Einschüben, Leiterkarten und dergleichen gebildet werden.

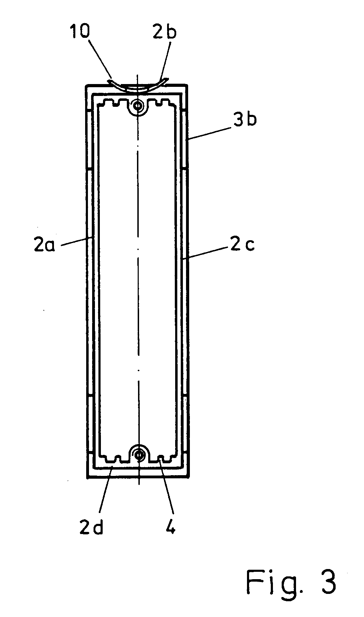

Das Gehäuse wird in Richtung des in Figur 1 gezeigten Pfeils 19 in die Öffnung beispielsweise einer Schalttafel eingeschoben, deren Wand 20 in Figur 1 angedeutet ist. Ein anderes Beispiel einer Aufnahmewand für das Gehäuse ist eine Rastersystemwand die aus einer Vielzahl nach einem Rastersystem zusammensteckbaren vertikalen und horizontalen Wände besteht, deren Wandebenen parallel zur Einschubrichtung des Pfeils 19 in Figur 1 liegen. Die Öffnung in der Aufnahmewand ist so bemessen, daß das Gehäuse mit der Kante 3a (Figur 1) eines um die Frontseite des Gehäuses verlaufenden Verstärkungsstreifen 3 gegen die vordere Begrenzung der Aufnahmeöffnung anliegt. In diesem Verstärkungsstreifen sind in Figur 1 und 3 auch Ausnehmungen 3b erkennbar, in die der von vorne aufsetzbare nicht dargestellte Frontrahmen mit entsprechenden Vorsprüngen einrastet.

Zur Befestigung des Gehäuses in der Aufnahmewand ist an den beiden gegenüberliegenden schmalen Seitenwänden 2b,2d je ein Federlement gemäß der Erfindung befestigt. In Figur 1 ist die untere Befestigungsstelle für ein Federlement im partiellen Schnitt und ohne eingesetztes Federlement dargestellt.

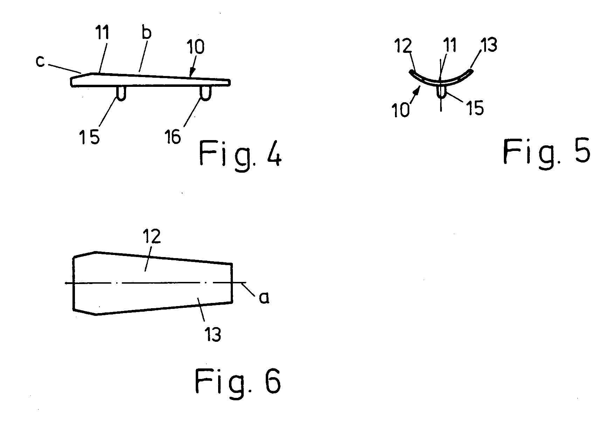

Der Aufbau des Federlementes geht am besten aus den Figuren 4 bis 6 hervor. Das Federlement besteht aus einem gewölbten federnden Plättchen 11, an dessen der Gehäuseseitenwand zugwandten Unterseite zwei in Einschubrichtung des Gehäuses fluchtende Stifte 15 und 16 vorhanden sind. Das federnde Plättchen ist symmetrisch zu einer mit der Einschubrichtung zusammenfallenden Symmetrieachse a aufgebaut und berührt längs dieser Symmetrieachse die Gehäusewand tatsächlich oder annähernd. Nach beiden Seiten dieser Symmetrieachse erstrecken sich Federflansche 12 und 13 mit anwachsendem Abstand von der Gehäuseseitenwand. Da das dünne Plättchen gute Federeigenschaften hat, lassen sich diese Federflansche senkrecht zur Fläche der Gehäusewand herunterbiegen, wobei die rückstellende Federkraft durch entsprechende Dicke des Plättchens beeinflußt werden kann. In Einschubrichtung ist das federnde Plättchen 11 derart aufgebaut, daß, gesehen in Blickrichtung vom Ende des Gehäuses aus, die Erhebung des Federlementes über die Gehäusewand zunächst sehr klein ist, dann allmählich kontinuierlich zunimmt (Bereich b) und im vorderen Bereich c wieder auf einen bestimmten Wert abnimmt.

Die von dem federnden Plättchen im nicht verformten Zustand eingenommene Fläche ist vorzugsweise ein Ausschnitt aus der Mantelwand eines Kreiszylinders oder eines Ellipsenzylinders. An der Unterseite des Federlementes sind auf der Symetrieachse zwei Befestigungsstifte 15,16 vorgesehen, mit denen das Federlement in entsprechende Bohrungen 15a,16a (Figur 1) eingesetzt werden kann. Die Bohrungen können duch die Gehäusewand hindurchgehen oder als Sacklöcher ausgeführt sein. Die Befestigung kann durch Kleben erfolgen oder aber auch durch Einpressen der mit entsprechendem Press- oder Paßsitz bemessenen Stifte.

Dank der geringen Höhe des Federelementes an seinem der Rückseite des Gehäuses zugewandten Ende behindert das Federelement das Reinstecken des Gehäuses in die Öffnung der Aufnahmewand nicht. Beim weiteren Hineinschieben trifft dann die Kante der Aufnahmeöffnung in der Wand 20 (Figur 1) auf die kontinuierlich höher werdenden Federflansche 12,13 und drückt diese in Richtung zur Gehäusewand runter. Durch die Abschrägung der Federflansche im vorderen Bereich c wird neben den in der Ebene der Gehäusewand wirkenden Haltekräfte eine das Gehäuse in die Gehäusewand hineinziehende Kraftkomponente von den Federelementen erzeugt. Wie ein Vergleich zwischen Figur 1 und Figur 4 zeigt, ist die Höhe des Federlementes 10 im eingeschobenen Zustand (Figur 1) niedriger als im nicht eingeschobenen Zustand, da das Federlement durch die Wand 20 unter Vorspannung steht und hierbei flacher gedrückt wird.

Das in den Figuren beschriebene Federlement kann in vielfacher Weise abgewandelt werden. Ein symetrischer Aufbau wie beschrieben ist nicht zwingend. Das Federlement kann auch mit nur einem Federflansch ausgebildet sein. Die Höhenänderung des Federelementes in Einschubrichtung braucht nicht linear zu sein. Im Prinzip genügt auch ein einziger Befestigungsstift, und es können auch verschieden große Befestigungsstifte vorgesehen sein.

Die Befestigungsvorrichtung gemäß der Erfindung ist besonders vorteilhaft bei solchen Gehäusen verwendbar, bei denen die mit dem Befestigungselement auszurüstende Gehäuseseite sehr schmal ist. Die Breite des Befestigungselementes 10 kann in der Größenordnung von 1 cm liegen.

## Patentansprüche

1. Vorrichtung zur Befestigung von Gehäusen in Öffnungen einer Aufnahmewand (20), beispielsweise einer Schalttafel oder einer Rastersystemwand, wobei das Gehäuse (1) von der Frontseite der Aufnahmewand (20) her in die Öffnung einschiebbar ist, mit mindestens einem an einer Seitenwand (2a-2d) des Gehäuses befestigten Federelement (10), welches aus einem Plättchen (11) besteht, mit mindestens einem schräg von der Gehäusewandfläche weg und zu der zur Einschubrichtung (19) parallelen Seitenkante der Gehäuseseitenwand hin verlaufenden Federflansch (12,13), der senkrecht zur Einschubrichtung (19) des Gehäuses elastisch verformbar ist und, gesehen von der Rückseite des Gehäuses aus, zunächst eine sehr geringe Höhe hat, die dann in Richtung zur Frontseite des Gehäuses im wesentlichen kontinuierlich zunimmt, welches Federelement (10) im eingeschobenen Zustand des Gehäuses zur Gehäuseseitenwand hin elastisch verformt ist und an den die Einschuböffnung begrenzenden Teilen der Aufnahmewand anliegt und welches Federelement (10) an seiner dem Gehäuse zugewandten Seite mit einer Einrichtung zur Befestigung an der Gehäuseseitenwand (2b,2d) versehen ist, **dadurch gekennzeichnet,** daß die Höhe des mindestens einen Federflansches (12,13) an seinem zur Frontseite des Gehäuses gerichteten Ende wieder derart abnimmt, daß beim Einschieben des Gehäuses kurz vor dem Erreichen der Endlage eine das Gehäuse in die Öffnung hineinziehende Kraft auftritt.

2. Befestigungsvorrichtung nach Anspruch 1, **dadurch gekennzeichnet**, daß die Einrichtung zur Befestigung des Federlementes an der Gehäuseseitenwand (2b,2d) aus mindestens einem, vorzugsweise zwei, Stift/Stiften (15,16) besteht, die in entsprechende Löcher (15a,16a) in der Gehäuseseitenwand eingelassen sind.

3. Befestigungsvorrichtung nach Anspruch 1 oder 2, **dadurch gekennzeichnet**, daß sich die Federflansche (12,13) annähernd über die gesamte Länge des Federlementes in Einschubrichtung (19) des Gehäuses erstrecken.

4. Befestigungsvorrichtung nach einem der vorhergehenden Ansprüche, **dadurch gekennzeichnet**, daß das federnde Plättchen (11) mit den Befestigungsstiften (15,16) aus einem integralen Kunststoffteil besteht.

5. Befestigungsvorrichtung nach einem der vorhergehenden Ansprüche, **dadurch gekennzeichnet**, daß die von dem federnden Plättchen (11) eingenommene Fläche auf einer Kreis- oder Ellipsenzylinderfläche liegt.

6. Befestigungsvorrichtung nach einem der vorhergehenden Ansprüche, **dadurch gekennzeichnet**, daß das Federlement (10) mit seiner vorderen Kante bis an die Verstärkungskante (3) des Gehäuses reicht.

7. Befestigungsvorrichtung nach einem der vorhergehenden Ansprüche, **dadurch gekennzeichnet**, daß die Stifte (15,16) des Federlementes (10) in die Löcher (15a,16a) der Gehäuseseitenwand mit entsprechendem Toleranzsitz eingepreßt sind und/oder eingeklebt sind.

8. Befestigungsvorrichtung nach einem der vorhergehenden Ansprüche, **dadurch gekennzeichnet**, daß das Federlement (10) zu einer Achse achsialsymmetrisch aufgebaut ist, die parallel zur Einschubrichtung des Gehäuses in die Wand verläuft, wobei die Stifte (15,16) auf der Symmetrieachse liegen und je ein Federflansch (12,13) sich von der Symmetrieachse aus zu der zur Einschubrichtung parallelen Seitenkante der Gehäuseseitenwand hin schräg von der Gehäusewand weg erstreckt.

## Claims

1. Device for mounting housings in the openings of a receiving wall (20), such as a switchboard or a matrix panel, the housing (1) being insertable into the opening from the frontside of the receiving wall (20), with at least one spring element (10) attached to a side wall (2a - 2d) of the housing, which spring element consists of a small plate (11) with at least one spring flange (12, 13) extending obliquely away from the area of the housing wall and towards that side edge of the housing wall which extends in parallel to the direction of insertion (19), which spring flange is elastically deformable perpendicular to the direction of insertion (19) of the housing and, seen from the rear side of the housing, at first has a very small height which then increases substantially continuously in the direction towards the frontside of the housing, which spring element (10) in the inserted state of the housing is elastically deformed towards the side wall of the housing and abuts against those portions of the receiving wall which form the boundary of the insertion opening, and which spring element (10) is provided on its side facing the housing with means to attach the spring element to the side wall (2b, 2d) of the housing, **characterized** in that the height of said at least one spring flange (12, 13) again decreases at its end pointing towards the front side of the housing such that, when inserting the housing, shortly before the end position has been reached a force is developed which pulls the housing into the opening.

2. Mounting device according to claim 1, **characterized** in that the means for fastening the spring element to the side wall (2b, 2d) of the housing consists of at least one, preferably two, pin/pins (15, 16) which are inserted into corresponding holes (15a, 16a) in the side wall of the housing.

3. Mounting device according to claim 1 or 2, **characterized** in that said spring flanges (12, 13) extend approximately along the entire length of the spring element in the direction of insertion (19) of the housing.

4. Mounting device according to any of the preceding claims, **characterized** in that said resilient small plate (11) with said fastening pins (15, 16) consists of one integral part made of plastic.

5. Mounting device according to any of the preceding claims, **characterized** in that the area occupied by the resilient small plate (11) forms part of a circular or elliptical cylindrical area.

6. Mounting device according to any of the preceding claims, **characterized** in that said spring element (10) extends with its front edge to the enforcement ridge (3) of the housing.

7. Mounting device according to any of the preceding claims, **characterized** in that said pins (15, 16) of the spring element (10) are pressed into the holes (15a, 16a) of the side wall of the housing with a corresponding tolerance fit and/or are fixed in the holes by glueing.

8. Mounting device according to any of the preceding claims, **characterized** in that said spring element (10) is designed axially symmetrical with respect to an axis which extends in parallel to the direction of insertion of the housing into the wall, said pins (15, 16) being located on said symmetry axis, and that one spring flange (12, 13) each extends from said symmetry axis towards each side edge of the side wall of the housing and away from the wall of housing.

## Revendications

1. Dispositif pour fixer des boîtiers dans des ouvertures d'une paroi réceptrice (20), par exemple un panneau de distribution ou une paroi d'un système en grille, dans lequel le boîtier (1) peut être inséré dans l'ouverture à partir de la face avant de la paroi réceptrice (20), et comportant au moins un élément élastique (10), fixé à une paroi latérale (2a-2d) du boîtier et constitué par une plaquette (11), et au moins une bride (12,13) élastique qui s'étend obliquement de la surface de la paroi du boîtier en direction du bord latéral, qui est parallèle à la direction d'insertion (19), de la paroi latérale du boîtier et qui est déformable élastiquement perpendiculairement à la direction d'insertion (19) du boîtier et qui, lorsqu'on regarde à partir de la face arrière du boîtier, possède tout d'abord une très faible hauteur, qui augmente ensuite sensiblement continûment en direction de la face avant du boîtier, lequel élément élastique (10) est déformé élastiquement en direction de la paroi latérale du boîtier, lorsque le boîtier est à l'état inséré, et s'applique sur les parties de la paroi réceptrice, qui délimitent l'ouverture d'insertion, et est pourvu, sur sa face tournée vers le boîtier, d'un dispositif permettant la fixation à la paroi latérale (2b,2d) du boîtier, caractérisé par le fait que la hauteur d'au moins une bride élastique (12,13) diminue a nouveau à son extrémité tournée vers la face avant du boîtier de sorte que lors de l'insertion du boîtier, peu avant que ce dernier atteigne la position finale, il apparaîsse une force qui entraîne le boitier dans l'ouverture.

2. Dispositif de fixation suivant la revendication 1, caractérisé par le fait que le dispositif servant à fixer l'élément élastique sur la paroi latérale (2b,2d) du boîtier est constitué d'au moins un et de préférence deux tétons (15,16), qui sont insérés dans des trous correspondants (15a,16a) de la paroi latérale du boîtier.

3. Dispositif de fixation suivant la revendication 1 ou 2, caractérisé par le fait que les brides (12,13) élastiques s'étendent presque sur toute la longueur de l'élément élastique dans la direction d'insertion (19) du boîtier.

4. Dispositif de fixation suivant l'une des revendications précédentes, caractérisé par le fait que la plaquette élastique (11) munie des tétons de fixation (15,16) est d'une seule pièce en matière plastique.

5. Dispositif de fixation suivant l'une des revendications précédentes, caractérisé par le fait que la surface, prise par la plaquette élastique (11), est située sur une surface cylindrique à base circulaire ou elliptique.

6. Dispositif de fixation suivant l'une des revendications précédentes, caractérisé par le fait que l'élément élastique (10) s'étend, par son bord avant, jusqu'au bord de renforcement (3) du boîtier.

7. Dispositif de fixation suivant l'une des revendications précédentes, caractérisé par le fait que les tétons (15,16) de l'élément élastique (10) sont insérés à force et/ou collés dans les trous (15a,16a) de la paroi latérale du boîtier, selon un ajustement de tolérance adéquat.

8. Dispositif de fixation suivant l'une des revendications précédentes, caractérisé par le fait que l'élément élastique (10) est de révolution par rapport à un axe qui est parallèle à la direction d'insertion du boîtier dans la paroi, les tétons (15,16) étant sur l'axe de symétrie, tandis que chaque bride (12,13) élastique s'étend depuis l'axe de symétrie en direction du bord latéral, parallèle à la direction d'insertion, de la paroi latérale du boîtier obliquement à partir de cette paroi.
